# DEMANDE DE BREVET EUROPEEN

(11) **EP 3 404 457 A1**
(43) Date de publication de la demande: **21.11.2018**
(21) Numéro de dépôt: 18172476.6
(22) Date de dépôt: 15.05.2018
(51) Int. Cl.: G02B 6/34, G02B 6/42, G02B 6/30, G02B 6/43, G02B 6/12

(54) **PUCE PHOTONIQUE À STRUCTURE RÉFLÉCHISSANTE DE REPLIEMENT DE TRAJET OPTIQUE**

(30) Priorité: 17.05.2017 FR 1754362
(71) Demandeur: Commissariat à l'énergie atomique et aux énergies alternatives, 75015 Paris (FR)
(72) Inventeur: MENEZO, Sylvie, 38500 VOIRON (FR); BERNABE, Stéphane, 38430 MOIRANS (FR); GROSSE, Philippe, 38360 SASSENAGE (FR)
(74) Mandataire: Brevalex

(57) **Abrégé**

L'invention porte sur le couplage optique d'une puce photonique à un dispositif extérieur au moyen d'un système à deux lentilles. La puce photonique (1) comprend une couche de guidage de la lumière (12) supportée par un substrat (10) et recouverte par une couche d'encapsulation (13), et une lentille (14) intégrée au niveau de l'une de ces faces avant et arrière. La couche de guidage de la lumière inclut un guide d'onde (121) couplé à un réseau de couplage surfacique (122). On prévoit un agencement d'une ou plusieurs structures réfléchissantes (151, 152) chacune sur l'une des faces avant et arrière. Cet agencement comporte une structure réfléchissante sur la face arrière et est réalisé de manière à assurer la propagation de la lumière entre le réseau de couplage surfacique et la lentille selon un trajet optique présentant au moins un repliement. L'invention couvre également le procédé de fabrication d'une telle puce photonique.

## Description

### DOMAINE TECHNIQUE

Le domaine de l'invention est celui de la photonique intégrée sur puce. L'invention concerne plus particulièrement le couplage optique d'une puce photonique avec un dispositif extérieur, par exemple avec une autre puce photonique, une fibre optique ou un ensemble de fibres optiques.

### ÉTAT DE LA TECHNIQUE ANTÉRIEURE

Les puces photoniques comprenant un circuit photonique intégré (« Photonic Integrated Circuit ») sont généralement fabriquées sur des substrats SOI (« Silicon On Insulator » pour silicium sur isolant) pour la technologie photonique silicium, ou des substrats InP (phosphure d'indium) ou GaAs (arséniure de galium) pour la technologie photonique III-V.

Le circuit photonique devant en général communiquer avec le monde extérieur, il est nécessaire de pouvoir injecter la lumière provenant d'un dispositif extérieur tel qu'une fibre optique dans le circuit et vice-versa. Le composant le plus couramment utilisé en photonique silicium pour réaliser ce couplage de la lumière entre la fibre et le circuit est le réseau de couplage surfacique, qui permet d'une part d'adapter la taille du mode optique se propageant dans les guides du circuit à la taille du mode se propageant dans les fibres monomodes standards, et d'autre part de passer d'une propagation guidée dans le plan de la puce photonique à une propagation en espace libre quasi-verticale au plan de la puce.

En technologie silicium, ce composant permet ainsi de coupler la lumière d'un guide d'onde dans le plan de la puce photonique à une fibre monomode clivée faisant un angle avec la verticale, couramment d'environ 8°. Sa taille de mode Do est conçue pour être similaire à la taille de mode de la fibre monomode, et est donc d'environ 9.2µm de diamètre, ce qui correspond à un couplage optimisé de lumière entre le guide d'onde silicium de la puce photonique et la fibre monomode clivée. Ses pertes sont de 1 à 4 dB optiques lorsque l'alignement géométrique entre le réseau de couplage surfacique et la fibre monomode est optimal. La tolérance d'alignement réseau-fibre, caractérisée comme le désalignement radial par rapport à l'alignement optimal qui engendre 1 dB de pertes supplémentaires, est d'environ +/- 2 µm.

Afin d'augmenter cette tolérance d'alignement pour rendre les opérations d'alignement moins complexes et notamment réalisables selon des techniques d'alignement passif moins coûteuses, il a été proposé dans l'article de S. Bernabé et al., "On-Board Silicon Photonics-Based Transceivers With 1-Tb/s Capacity", in IEEE Transactions on Components, Packaging and Manufacturing Technology, vol. 6, n°7, Juillet 2016, d'avoir recours à un système de deux lentilles composé d'une première lentille solidaire de la puce photonique et d'une deuxième lentille solidaire de la fibre optique. Ce système peut exploiter un connecteur à lentille dans lequel on vient insérer la fibre optique la positionnant de ce fait vis-à-vis de la deuxième lentille. La première lentille doit quant à elle être alignée avec la puce photonique de manière très précise, puis doit être solidarisée avec elle. La tolérance d'alignement entre l'ensemble puce + première lentille et l'ensemble deuxième lentille + fibre est alors augmentée à +/- 40 µm.

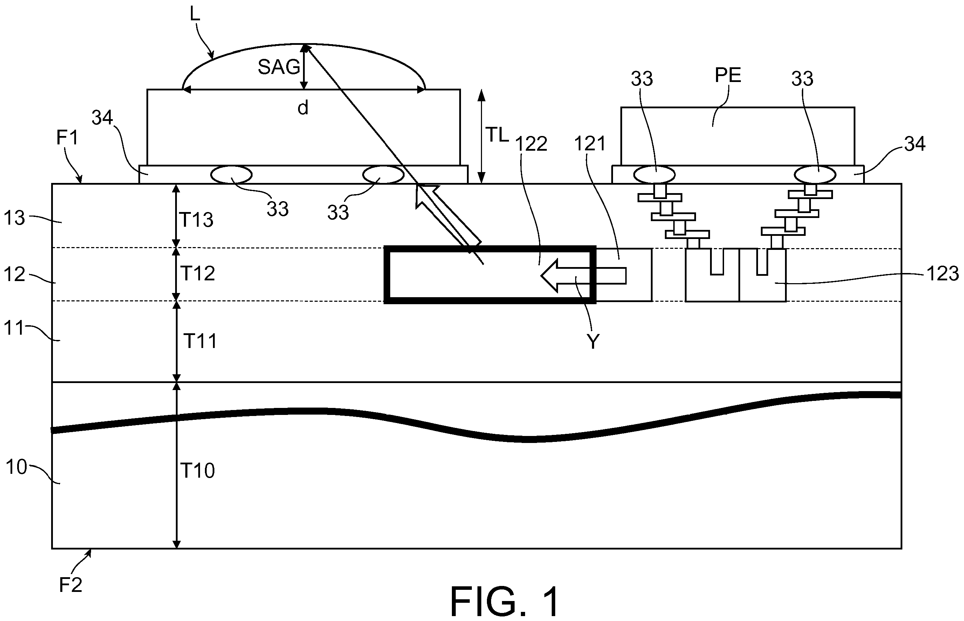

On a représenté sur la figure 1 une vue en coupe schématique de la puce photonique et de la première lentille L rapportée et solidarisée sur une face de celle-ci. La puce photonique comprend une couche de guidage de la lumière 12 d'épaisseur T12 (par exemple 300 nm) supportée par un substrat 10 en silicium d'épaisseur T10 (par exemple 750 µm) et recouverte par une couche d'encapsulation 13 d'épaisseur T13 (par exemple 3 µm). La puce photonique présente une face avant F1 du côté de la couche d'encapsulation 13 et une face arrière F2 du côté du substrat 10.

La couche de guidage de la lumière 12 porte les composants photoniques (guide d'onde, réseau de couplage surfacique, modulateur PN, etc.), la fabrication desquels comprend par exemple la gravure d'une couche de silicium sur isolant. Dans un tel cas de figure, la couche de guidage de la lumière 12 est séparée du substrat 10 par une couche d'oxyde enterré 11 (BOX pour « Buried Oxide Layer ») d'épaisseur T11 (par exemple 800 nm).

La couche de guidage de la lumière 12 inclut un guide d'onde 121 couplé à un réseau de couplage surfacique 122 configuré pour recevoir la lumière depuis le guide d'onde et former à partir de celle-ci un faisceau de lumière dirigé en direction de la face avant F1 de la puce photonique (ou vice versa). Le guide d'onde 121 et le réseau de couplage surfacique 122 sont ici représentés selon une coupe longitudinale, la lumière se propageant dans ces composants dans le plan de la figure, dans la direction Y lorsqu'il s'agit d'extraire de la lumière depuis la puce photonique.

La couche de guidage de la lumière 12 peut également comprendre des composants actifs, tel qu'un modulateur 123 constitué par un guide d'onde à jonction PN, ici représenté selon une coupe latérale, la lumière se propageant dans ce composant perpendiculairement au plan de la figure.

La couche d'encapsulation 13 comprend généralement des niveaux de métal d'interconnexion électrique de la puce photonique. Cette couche est connue sous le nom de « Back End Of Line » (BEOL) dans les procédés de fabrication utilisés en microélectronique. Elle présente une épaisseur T13 de quelques microns (par exemple 3µm), et est constituée de matériaux diélectriques et de lignes gravées de métal. Une puce électronique PE destinée à piloter ou lire les composants photoniques actifs de la puce photonique (modulateurs, photo-détecteurs) est généralement reportée sur la puce photonique. Sur la figure 1, la puce PE est ainsi électriquement connectée au modulateur 123 dans la couche de guidage de la lumière, au moyen par exemple de micro piliers de cuivre 33. De façon à assurer une bonne tenue mécanique de la puce PE avec la puce photonique, il est nécessaire de remplir l'interstice entre la puce électronique PE et puce photonique avec une couche de remplissage 34 en un matériau polymère.

La lentille L est positionnée sur la face avant F1 de la puce photonique, en regard du réseau de couplage surfacique 122, pour modifier la taille de mode de la lumière la traversant depuis ou vers le réseau de couplage surfacique. Cette lentille peut par exemple être solidarisée à la puce photonique au moyen également de micro piliers de cuivre 33, l'interstice entre la lentille L et la puce photonique étant comblé par une même couche de remplissage 34 en un matériau polymère. Avec un tel procédé de solidarisation, la couche de remplissage 34 se retrouve sur le chemin optique du faisceau lumineux entre le réseau de couplage surface 122 et la lentille L. L'introduction de cette couche de matériau polymère génère des pertes supplémentaires.

Afin d'élargir et de collimater une source de lumière de longueur d'onde λ et de taille de mode Do=2*wo en sortie du réseau de couplage surfacique, la lentille L doit avoir une longueur de focale dans l'air égale à Fair= Di. (π. wo/2λ), Di étant la taille du faisceau élargi en sortie de la première lentille. Pour obtenir un faisceau collimaté élargi avec un diamètre Di d'environ 100 µm, et en faisant par simplification l'hypothèse d'un angle de sortie du réseau de couplage surfacique par rapport à la verticale de 0°, la lentille, convexe, réalisée en verre de silice d'indice 1.45 à la longueur d'onde 1.31µm, doit présenter les caractéristiques suivantes :
- épaisseur TL d'environ 860 µm, correspondant à une longueur de focale dans l'air, Fair, d'environ 600 µm ;
- rayon de courbure d'environ 270 µm ;
- diamètre d d'environ 10 µm,
- profondeur de sagitta SAG d'environ 6 µm.

La tolérance d'alignement de la lentille L avec la puce photonique est de +/- 2µm. La lentille L doit dont être alignée avec la puce photonique de manière très précise, avant d'être solidarisée avec elle.

### EXPOSÉ DE L'INVENTION

L'invention a pour objectif de permettre de s'affranchir de la complexe et coûteuse opération d'alignement de la lentille avec la puce photonique dans un système de couplage à deux lentilles de la puce photonique à un dispositif extérieur.

Elle propose pour ce faire une puce photonique comprenant une couche de guidage de la lumière supportée par un substrat et recouverte par une couche d'encapsulation. La puce photonique présente une face avant du côté de la couche d'encapsulation et une face arrière du côté du substrat. La couche de guidage de la lumière inclut un guide d'onde couplé à un réseau de couplage surfacique configuré pour recevoir pour recevoir de la lumière depuis le guide d'onde et former un faisceau de lumière dirigé vers l'une des faces avant et arrière. La puce photonique comporte en outre une lentille intégrée au niveau de l'une des faces avant et arrière et configurée pour modifier la taille de mode de la lumière la traversant depuis ou vers le réseau de couplage surfacique. La puce photonique comprend par ailleurs un agencement d'une ou plusieurs structures réfléchissantes chacune sur l'une des faces avant et arrière. Ledit agencement comporte une structure réfléchissante sur la face arrière et est réalisé de manière à assurer la propagation de la lumière entre le réseau de couplage surfacique et la lentille selon un trajet optique présentant au moins un repliement.

Certains aspects préférés mais non limitatifs de cette puce sont les suivants :
- une structure réfléchissante dudit agencement est une couche métallique agencée sur l'une des faces avant et arrière ;
- une structure réfléchissante dudit agencement est un réseau de Bragg distribué formé sur l'une des faces avant et arrière ;
- la lentille est intégrée au niveau de la face avant, le réseau de couplage surfacique est configuré pour rediriger le faisceau de lumière en direction de la face arrière et ledit agencement comprend le long du trajet optique une seule structure réfléchissante sur la face arrière ;
- la lentille est intégrée au niveau de la face avant, le réseau de couplage surfacique est configuré pour rediriger le faisceau de lumière en direction de la face avant et ledit agencement comprend le long du trajet optique une première structure réfléchissante sur la face avant et une deuxième structure réfléchissante sur la face arrière ;
- la lentille est intégrée au niveau de la face arrière, le réseau de couplage surfacique est configuré pour rediriger le faisceau de lumière en direction de la face arrière et ledit agencement comprend le long du trajet optique une première structure réfléchissante sur la face arrière et une deuxième structure réfléchissante sur la face avant ;
- la lentille est intégrée au niveau de la face arrière, le réseau de couplage surfacique est configuré pour rediriger le faisceau de lumière en direction de la face avant et ledit agencement comprend le long du trajet optique une première structure réfléchissante sur la face avant, une deuxième structure réfléchissante sur la face arrière et une troisième structure réfléchissante sur la face avant ;
- la couche d'encapsulation est une couche d'oxyde de silicium, une couche de nitrure de silicium, ou une couche d'un mélange d'oxyde de silicium et de nitrure de silicium ;
- la couche de guidage de la lumière repose sur une couche d'isolant, et une couche antireflet est interposée entre le substrat et la couche d'isolant ;
- le substrat est en verre.

L'invention porte également sur un procédé de fabrication d'une telle puce photonique, ledit procédé comprenant la formation d'un agencement d'une ou plusieurs structures réfléchissantes chacune sur l'une des faces avant et arrière de la puce, ledit agencement comportant une structure réfléchissante sur la face arrière et étant formé de manière à assurer la propagation de la lumière entre le réseau de couplage surfacique et la lentille selon un trajet optique présentant au moins un repliement.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà discutée précédemment, est une coupe schématique d'une puce photonique sur laquelle est rapportée une lentille ;
- la figure 2 est une coupe schématique d'une puce photonique conforme à l'invention disposant d'un réseau de couplage surfacique dirigeant la lumière en direction de la face arrière et d'une lentille intégrée en face avant ;
- la figure 3 est une coupe similaire à celle de la figure 2 illustrant un dimensionnement possible d'une puce photonique conforme à l'invention ;
- la figure 4 est une coupe schématique d'une puce photonique conforme à l'invention disposant d'un réseau de couplage surfacique dirigeant la lumière en direction de la face arrière et d'une lentille intégrée en face arrière ;
- la figure 5 est une coupe schématique d'une puce photonique conforme à l'invention disposant d'un réseau de couplage surfacique dirigeant la lumière en direction de la face avant et d'une lentille intégrée en face avant ;
- la figure 6 est une coupe schématique d'une puce photonique conforme à l'invention disposant d'un réseau de couplage surfacique dirigeant la lumière en direction de la face avant et d'une lentille intégrée en face arrière ;
- les figures 7-11 illustrent un premier exemple de réalisation de la puce photonique de la figure 2 ;
- les figures 12-16 illustrent un deuxième exemple de réalisation de la puce photonique de la figure 2 ;
- les figures 17-20 illustrent un exemple de réalisation d'une puce photonique avec lentille intégrée en face arrière.

### EXPOSÉ DÉTAILLÉ DE MODES DE RÉALISATION PARTICULIERS

L'invention porte sur le couplage optique d'une puce photonique à un dispositif extérieur au moyen d'un système d'élargissement de taille de mode, typiquement un système à deux lentilles, permettant d'augmenter la tolérance d'alignement entre la puce photonique et le dispositif extérieur. La puce photonique de l'invention est similaire à celle présentée précédemment en référence à la figure 1. La lentille n'y est cependant pas rapportée et solidarisée sur la face avant mais est directement intégrée au niveau de l'une des faces avant et arrière. Sur les différentes figures, les éléments identiques portent les mêmes références.

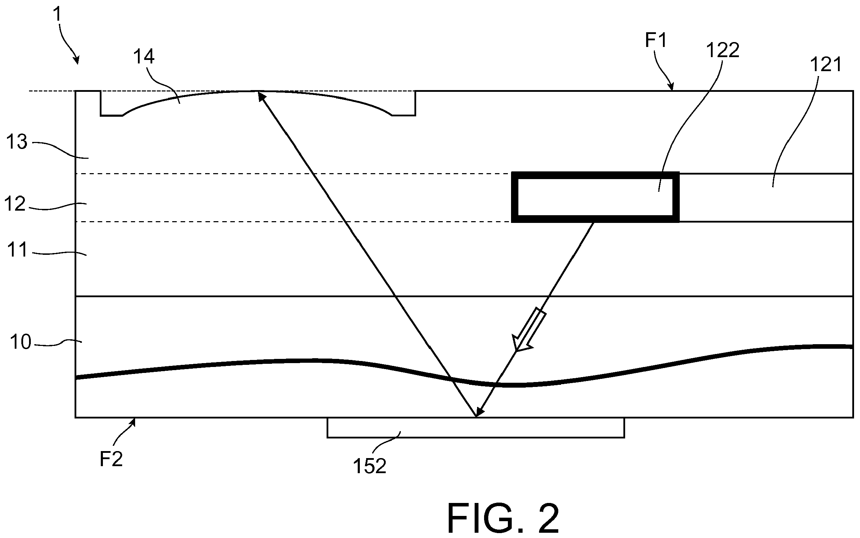

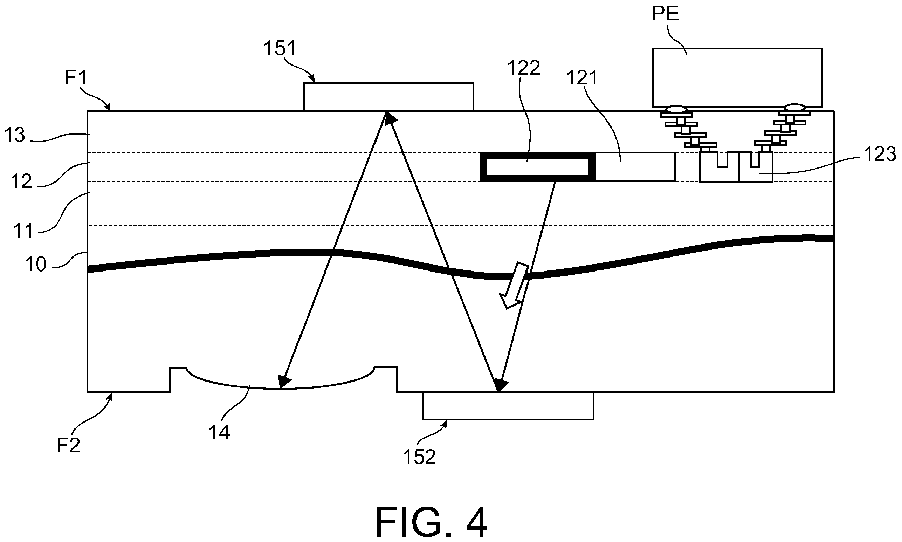

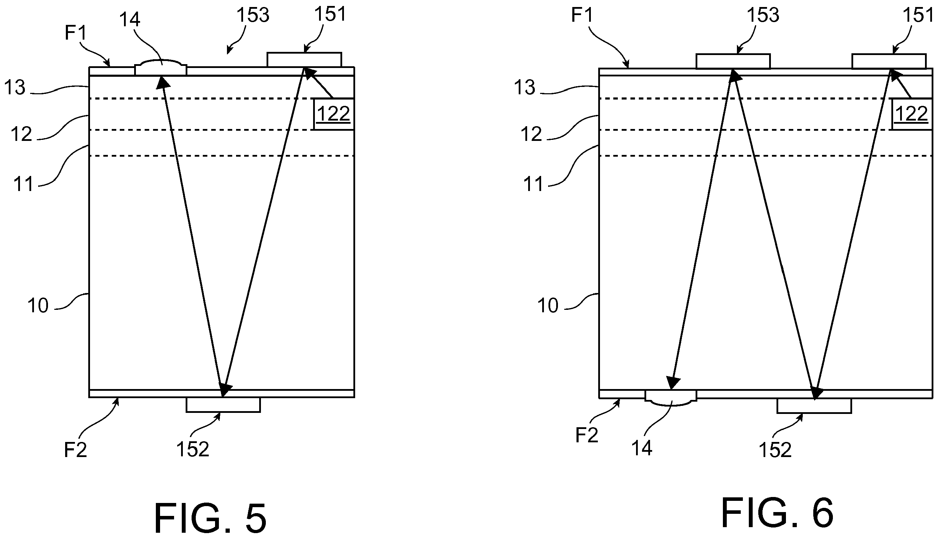

Les figures 2, 3 et 5 donnent un exemple d'une puce photonique conforme à l'invention à lentille intégrée en face avant, tandis que les figures 4 et 6 donnent un exemple d'une puce photonique conforme à l'invention à lentille intégrée en face arrière. En référence à ces figures, l'invention porte sur puce photonique 1 comprenant une couche de guidage de la lumière 12 supportée par un substrat 10 et recouverte par une couche d'encapsulation 13. Une couche d'oxyde enterré 11 peut être intercalée entre la couche de guidage de la lumière 12 et le substrat 10. La couche d'encapsulation 13 peut être une couche d'oxyde de silicium, une couche de nitrure de silicium, ou une couche présentant en un mélange d'oxyde de silicium et de nitrure de silicium. On notera qu'en réalisant la lentille dans une couche de nitrure de silicium dont l'indice n=2 supérieur à l'indice n=1.45 du SiO2, ou dans une couche en un mélange d'oxyde de silicium et de nitrure de silicium, on peut diminuer la valeur de la SAG.

Le substrat 10 peut être un substrat de silicium, de phosphure d'indium ou d'arséniure de galium. Dans un mode de réalisation possible, le substrat 10 est un substrat de verre présentant l'avantage de limiter les pertes optiques à l'interface entre la couche d'oxyde enterré 11 et le substrat 10.

La puce photonique 1 présente une face avant F1 du côté de la couche d'encapsulation 13 et une face arrière F2 du côté du substrat 10. La couche de guidage de la lumière comprend un guide d'onde 121 couplé à un réseau de couplage surfacique 122 configuré pour recevoir la lumière depuis le guide d'onde et former à partir de celle-ci un faisceau de lumière dirigé vers l'une des faces avant et arrière. Le réseau de couplage surfacique permet ainsi de passer d'une propagation guidée dans le plan de la puce à une propagation quasi-verticale, formant par exemple un angle d'environ 8° avec la verticale au plan de la puce.

La puce photonique comporte en outre une lentille 14 intégrée au niveau de l'une des faces avant et arrière et configurée pour modifier la taille de mode de la lumière la traversant depuis ou vers le réseau de couplage surfacique. La puce photonique à lentille intégrée est destinée à être couplée optiquement à un autre dispositif agencé en regard de la puce, par exemple un circuit optique, un circuit électro-optique, un puce photonique, une ou plusieurs fibres optiques, ce dispositif comportant au moins une entrée et/ou une sortie optique solidarisée à une lentille remplissant la fonction inverse de la lentille 14 intégrée à la puce photonique. La lentille 14 prend la forme d'un dioptre sphérique dont la calotte est formée sur l'une des faces avant et arrière, typiquement par gravure.

En venant intégrer la lentille à la puce photonique, l'invention permet de s'affranchir des coûteuses étapes d'alignement fin et de solidarisation de la lentille à la puce. Par lentille intégrée à la puce photonique, on entend notamment le fait que la lentille est fabriquée au niveau plaque (« wafer »), et plus particulièrement, le fait que la fabrication de la lentille s'intègre parfaitement à un procédé de fabrication standard de la puce photonique.

On a vu précédemment que pour obtenir un faisceau collimaté élargi de diamètre 100 µm avec une lentille en verre de silice, la lentille doit présenter une épaisseur d'environ 860 µm. Il en découle que la lentille ne peut pas être intégrée sur la face avant F1 de la puce photonique car le chemin optique entre le réseau de couplage surfacique 122 et la face avant F1 de la puce n'est que de quelques microns de silice (il correspond globalement à l'épaisseur T13 de la couche d'encapsulation 13, par exemple 3 µm).

Une intégration de la lentille sur la face arrière F2 de la puce, avec un réseau de couplage surfacique 122 configuré pour diriger le faisceau de lumière reçu du guide d'onde en direction de la face arrière, n'est pas non plus possible du fait de l'épaisseur insuffisante du substrat 10. Dans un tel cas de figure, la longueur du chemin optique entre le réseau de couplage surfacique 122 et la face arrière F2 de la puce peut être approximée comme étant l'épaisseur T10 du substrat 10. Pour des substrats de Si, d'InP ou de GaAs, l'indice optique à la longueur d'onde 1.31 µm est d'environ 3.5, et l'épaisseur nécessaire de matériau pour obtenir un faisceau élargi collimaté de diamètre 100 µm est de l'ordre de 2100 µm. Or l'épaisseur T10 est typiquement de 750µm+/-25µm pour un substrat en silicium de 200 mm de diamètre, de 625µm+/-25µm pour un substrat en InP de 75mm de diamètre, et de 450µm pour un substrat de substrat en GaAs de 75mm de diamètre. L'épaisseur du substrat 10 est donc généralement insuffisante pour permettre d'élargir le diamètre du faisceau de manière satisfaisante.

Pour pallier ces difficultés d'intégration de la lentille en face avant ou arrière de la puce photonique, et en référence aux figures 2 à 6, la puce photonique comprend en outre un agencement d'une ou plusieurs structures réfléchissantes 151, 152, 153 chacune sur l'une des faces avant et arrière. Cet agencement est réalisé de manière à assurer la propagation de la lumière entre le réseau de couplage surfacique 122 et la lentille 14 selon un trajet optique présentant au moins un repliement.

Plus particulièrement, cet agencement comprend une structure réfléchissante en face arrière. De telle manière, que la lentille soit intégrée en face avant ou en face arrière, le trajet optique comprend au moins un double passage par le substrat 10. En rallongeant ainsi la focale, la lentille 14 permet d'élargir de manière satisfaisante le diamètre du faisceau optique.

Dans un mode de réalisation, une structure réfléchissante dudit agencement est une couche métallique déposée sur l'une des faces avant et arrière, par exemple une couche d'or, d'argent ou d'aluminium. Dans une variante de réalisation, une structure réfléchissante dudit agencement est un réflecteur de Bragg distribué (DBR pour « Distributed Bragg Reflector ») formé d'un empilement de couches déposées sur l'une des faces avant et arrière.

Une structure réfléchissante est formée de manière localisée sur l'une des faces avant et arrière de la puce photonique. Alternativement, une structure réfléchissante peut être formée sur la totalité de l'une des faces avant et arrière de la puce photonique, par exemple sur l'intégralité de la face arrière en particulier dans l'exemple de la figure 2.

La description qui suit prend plus particulièrement l'exemple de la transmission de lumière du guide d'onde de la puce photonique en direction du dispositif extérieur (extraction de lumière), la lentille formant un port de sortie de la lumière. Les principes présentés sont toutefois parfaitement identiques pour une transmission de lumière depuis le dispositif extérieur en direction du guide d'onde de la puce photonique (injection de lumière), la lentille formant un port d'entrée de lumière. Ainsi, le réseau de couplage surfacique 122 est non seulement configuré pour recevoir la lumière depuis le guide d'onde et former à partir de celle-ci un faisceau de lumière dirigé vers la face arrière F2 et réfléchi par la ou les structures réfléchissantes jusqu'à atteindre et traverser la lentille, mais également configuré pour recevoir depuis la face arrière un faisceau de lumière ayant traversé la lentille et s'étant réfléchi sur la ou les structures réfléchissantes et transférer ce faisceau vers le guide d'onde.

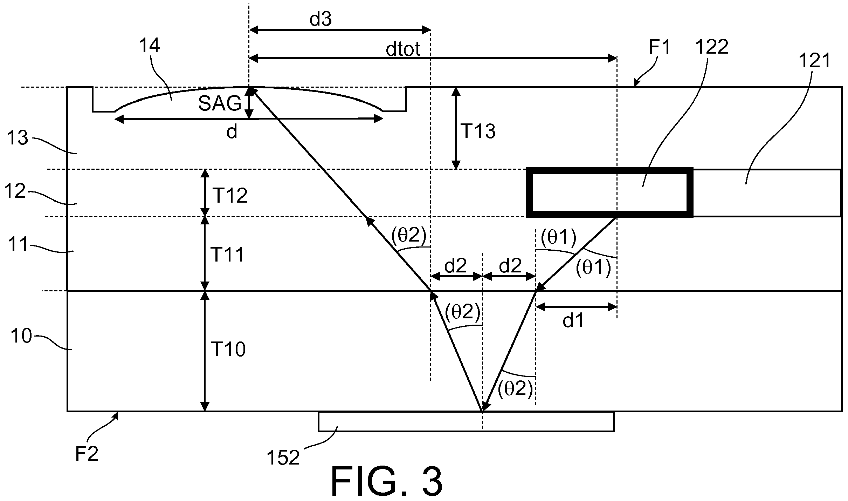

On a représenté sur les figures 2 et 3 un premier exemple d'intégration de la lentille en face avant de la puce photonique. Dans cet exemple, le réseau de couplage surfacique 122 est configuré pour recevoir la lumière depuis le guide d'onde et former à partir de celle-ci un faisceau de lumière dirigé vers la face arrière F2. Ici, ledit agencement d'une ou plusieurs structures réfléchissantes comporte une unique structure réfléchissante 152 sur la face arrière F2. Le faisceau en sortie du réseau de couplage surfacique 122 est réfléchi par cette structure réfléchissante 152 en direction de la lentille 14 en face avant F1.

On a représenté sur la figure 3 les angles pris par le faisceau lumineux le long du trajet optique entre le réseau de couplage surfacique 122 et la lentille 14. Ainsi, dans la couche d'oxyde enterré 11 en SiO2, l'angle Θ1 est environ de 8°. Dans le substrat 10 en silicium, l'angle Θ2 est environ de 3°. Le chemin optique, CO, du réseau de couplage surfacique à la lentille en face avant F1 s'écrit rigoureusement comme CO= 2 x T11 / cos (Θ1) + 2 x T10 / cos (Θ2) + (T12 + T13) / cos (Θ1). Ce chemin optique peut être approximé comme 2 x T10 avec moins de 0,5% d'erreur. Avec un substrat de silicium 10 d'épaisseur T10 = 750 µm parcouru 2 fois (dans le mode de réalisation des figures 2 et 3), la lentille présente une longueur de focale équivalente dans l'air d'environ 430 µm, et le diamètre du faisceau en sortie de la lentille 1 peut être élargi jusqu'à environ 75 µm.

En référence à la figure 3, la distance dtot séparant le centre du réseau de couplage surfacique 122 du centre de la lentille vaut: dtot = d1 + 2 x d2 + d3, soit approximativement 2 x d2 = 2 x T10 x tan (Θ2) = 87 µm. Le diamètre d de la lentille est de 80 µm, de sorte que la distance entre le bord de la lentille et le réseau surfacique est dtot -d/2 = 47 µm. Réalisée en SiO2, la lentille présente une sagitta SAG d'environ 9µm. Réalisée dans du nitrure de silicium SiNx, la SAG vaut environ 4.5µm.

On a représenté sur la figure 4 un premier exemple d'intégration de la lentille en face arrière de la puce photonique. Dans cet exemple, le réseau de couplage surfacique 122 est configuré pour recevoir la lumière depuis le guide d'onde et former à partir de celle-ci un faisceau de lumière dirigé vers la face arrière F2. Ici, ledit agencement d'une ou plusieurs structures réfléchissantes comporte une première structure réfléchissante 152 sur la face arrière F2 et une deuxième structure réfléchissante 151 sur la face avant F1. Le faisceau en sortie du réseau de couplage surfacique 122 est réfléchi par la première structure réfléchissante 152 en direction de la deuxième structure réfléchissante 151 puis de la deuxième structure réfléchissante 151 en direction de la lentille 14 en face arrière. Dans cet exemple, le chemin optique du réseau de couplage à la lentille peut être approximé à 3 x T10. Avec T10=750 µm, le diamètre du faisceau en sortie de la lentille 1 peut être élargi jusqu'à environ 110 µm.

On a représenté sur la figure 5 un deuxième exemple d'intégration de la lentille en face avant de la puce photonique. Dans cet exemple, le réseau de couplage surfacique 122 est configuré pour recevoir la lumière depuis le guide d'onde et former à partir de celle-ci un faisceau de lumière dirigé vers la face avant F1. Ici, ledit agencement d'une ou plusieurs structures réfléchissantes comporte une première structure réfléchissante 151 sur la face avant F1 et une deuxième structure réfléchissante 152 sur la face arrière F2. Le faisceau en sortie du réseau de couplage surfacique 122 est réfléchi par la première structure réfléchissante 151 en direction de la deuxième structure réfléchissante 152, puis de la deuxième structure réfléchissante 152 en direction de la lentille 14 en face avant. Dans cet exemple, le chemin optique du réseau de couplage à la lentille peut être approximé à 2 x T10.

On a représenté sur la figure 6 un deuxième exemple d'intégration de la lentille en face arrière de la puce photonique. Dans cet exemple, le réseau de couplage surfacique 122 est configuré pour recevoir la lumière depuis le guide d'onde et former à partir de celle-ci un faisceau de lumière dirigé vers la face avant F1. Ici, ledit agencement d'une ou plusieurs structures réfléchissantes comporte une première structure réfléchissante 151 sur la face avant F1, une deuxième structure réfléchissante 152 sur la face arrière F2 et une troisième structure réfléchissante 153 sur la face avant F1. Le faisceau en sortie du réseau de couplage surfacique 122 est réfléchi par la première structure réfléchissante 151 en direction de la deuxième structure réfléchissante 152, puis de la deuxième structure réfléchissante 152 en direction de la troisième structure réfléchissante 153, et enfin de la troisième structure réfléchissante 153 en direction de la lentille 14 en face arrière. Dans cet exemple, le chemin optique du réseau de couplage à la lentille peut être approximé à 3 x T10.

On notera que l'intégration de la lentille en face arrière (figures 4 et 6) peut s'accompagner de l'intégration d'un laser en face avant, notamment un laser III-V.

On a vu précédemment que la tolérance d'alignement de la lentille rapportée sur la puce photonique (figure 1) est de 2 µm. Cette tolérance est grandement augmentée par la mise en oeuvre de l'invention. Elle passe ainsi à plus de 18 µm en doublant le chemin optique dans le substrat (figures 2 et 5) et à plus de 28 µm en triplant le chemin optique dans le substrat (figures 4 et 6).

Dans un mode de réalisation possible, on vient amincir le substrat pour adapter le diamètre du faisceau élargi, par exemple pour qu'il soit conforme à des standards de connecteurs à lentille.

Afin de limiter les pertes de Fresnel lors de la traversée de l'interface entre la couche d'oxyde enterré 11 et le substrat 10 (elles sont de 0,8 dB avec une couche 11 en SiO₂ et un substrat 10 en Si), une couche antireflet (par exemple une couche de nitrure de silicium, d'épaisseur λ/4 où λ correspond à la longueur d'onde du faisceau lumineux) peut être agencée entre la couche 11 et le substrat 10.

Il est également possible d'adopter pour matériau de la couche d'oxyde enterré 11 non pas du SiO2 mais un nitrure de silicium SiNx ou un mélange de SiO2 et de SiNx. Les pertes lors de la traversée de l'interface entre la couche 11 et le substrat 10 sont alors d'environ 0.3dB avec une couche de nitrure de silicium d'indice effectif d'environ 2.

L'utilisation d'un substrat de verre, par exemple en verre borosilicate, permet quant à elle de supprimer les pertes optiques à l'interface couche 11-substrat 10.

On décrit dans ce qui suit deux exemples de réalisation d'une puce photonique conforme à l'invention et plus particulièrement d'une puce selon le mode de réalisation représenté sur la figure 2. Ces exemples diffèrent en ce que dans le premier exemple, le réseau de couplage surfacique est conçu pour diriger la lumière vers le bas, tandis qu'il est conçu pour diriger la lumière vers le haut dans le deuxième exemple.

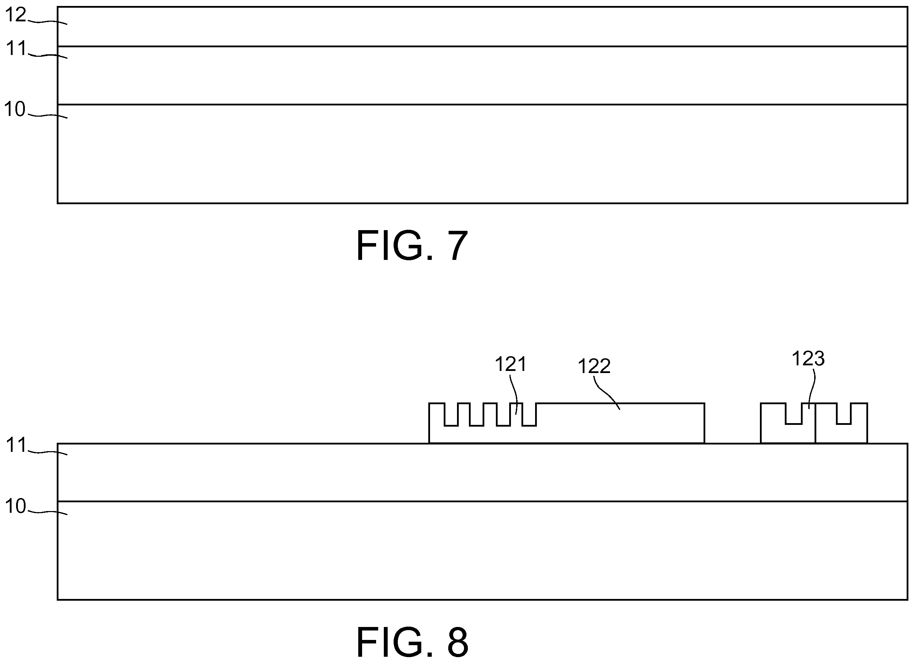

Dans le cadre du premier exemple de réalisation, le procédé débute (figure 7) par la fourniture d'un substrat SOI présentant une couche d'oxyde enterré 11 intercalée entre une couche de silicium superficielle 12 et un substrat de silicium 10 et par la fabrication (figure 8) des composants photoniques (guide d'onde 121, réseau de couplage surfacique 122, modulateur PN 123, etc.) par gravure localisée, partielle ou totale, de la couche superficielle 12 et, implantation dans le cas du modulateur. Une couche antireflet (non représentée) peut être interposée entre la couche d'oxyde enterré 11 et le substrat 10.

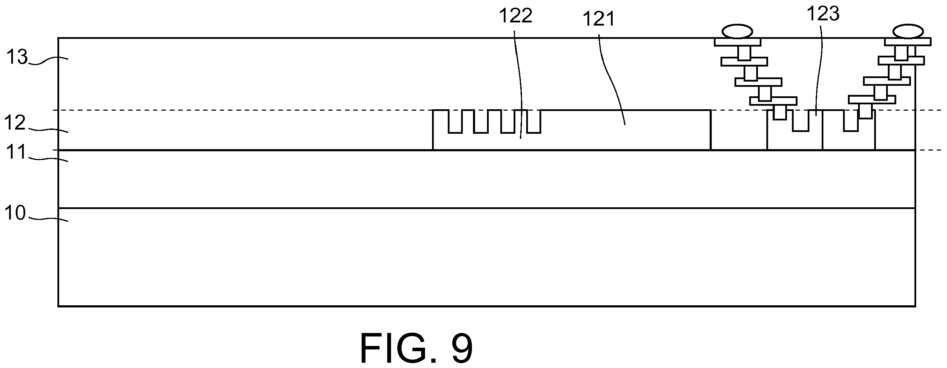

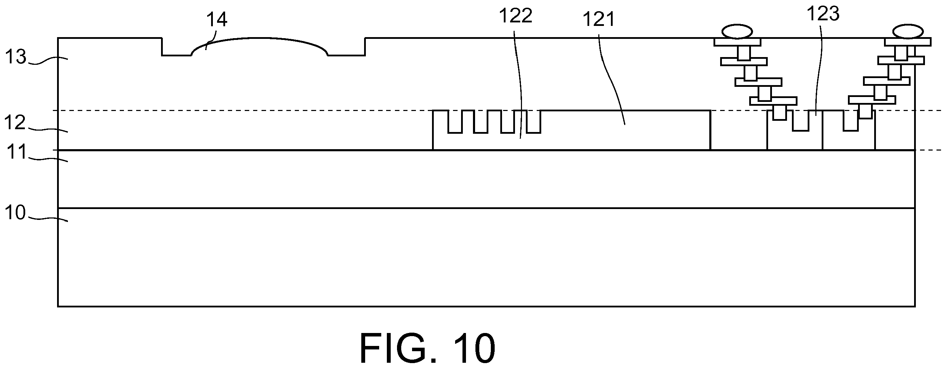

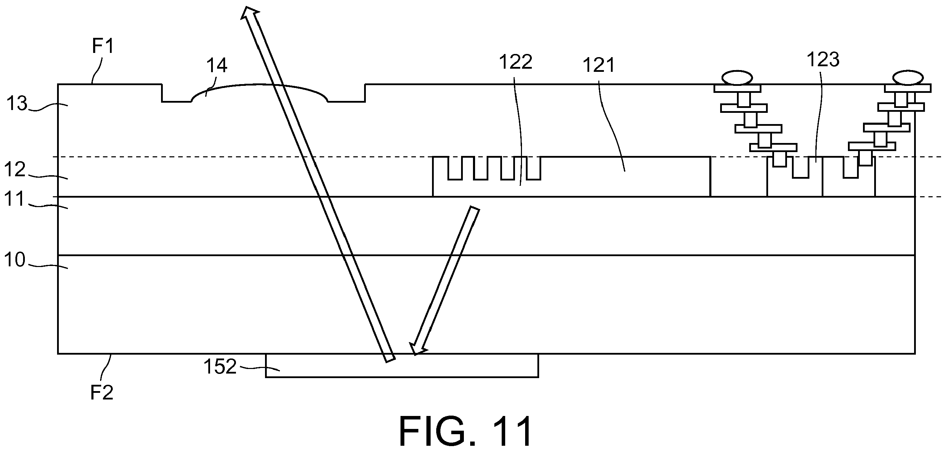

On procède ensuite (figure 9) à la fabrication de la couche d'encapsulation BEOL 13. Comme représenté, cette couche peut comprendre les niveaux de métal d'interconnexions électriques de la puce photonique, permettant ici de relier le modulateur 123 à une puce électronique. Puis (figure 10), on vient fabriquer la lentille 14 dans la couche 13. Elle peut être fabriquée dans le matériau diélectrique du BEOL ou dans un autre matériau d'encapsulation déposé. Cette fabrication peut comprendre une gravure mécanique, par exemple un usinage laser, ou une gravure chimique sèche (dite RIE pour « Reactive Ion Etching ») pour former un dioptre sphérique en surface de la couche 13. La gravure peut être réalisée après insolation d'une résine photosensible à travers un masque pour former un bossage de résine et fluage dudit bossage. Une fois formée, la lentille 14 peut être soumise à un traitement antireflet. On procède ensuite à la formation de la structure réfléchissante 152 en face arrière (figure 11), par exemple par dépôt d'une couche métallique. Cette opération peut toutefois être réalisée à un autre moment, par exemple en tout début de processus.

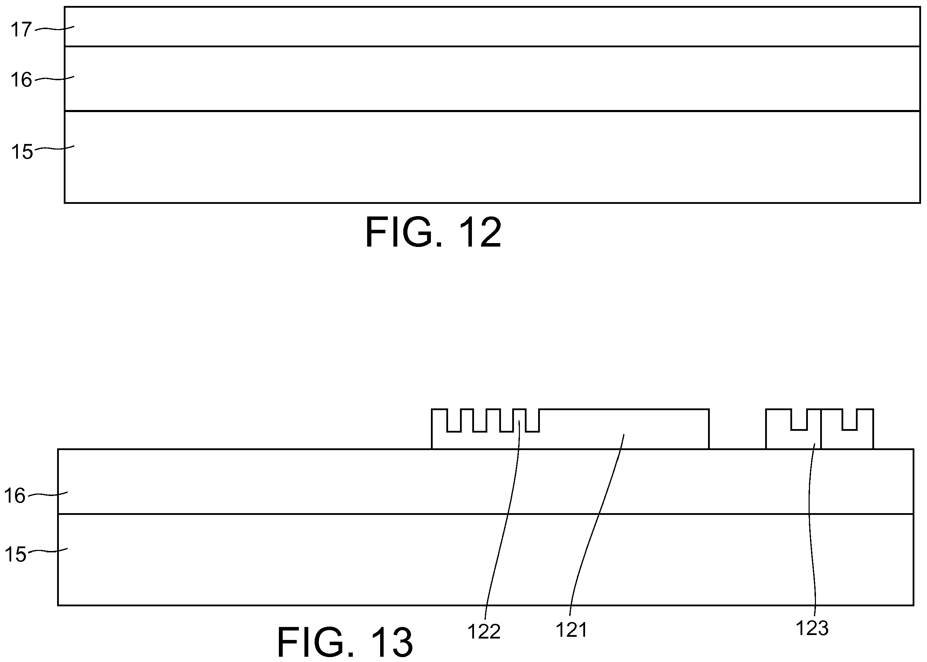

Dans le cadre du second exemple de réalisation, le procédé débute (figure 12) par la fourniture d'un substrat SOI présentant une couche d'oxyde enterré 16 intercalée entre une couche de silicium superficielle 17 et un substrat de silicium 15 et par la fabrication (figure 13) des composants photoniques (guide d'onde 121, réseau de couplage surfacique 122, modulateur PN 123, etc.) par gravure localisée, partielle ou totale, de la couche superficielle 17 et, implantation dans le cas du modulateur.

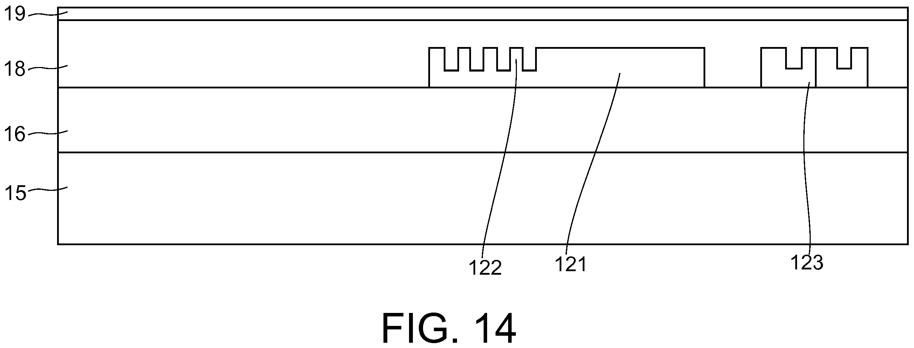

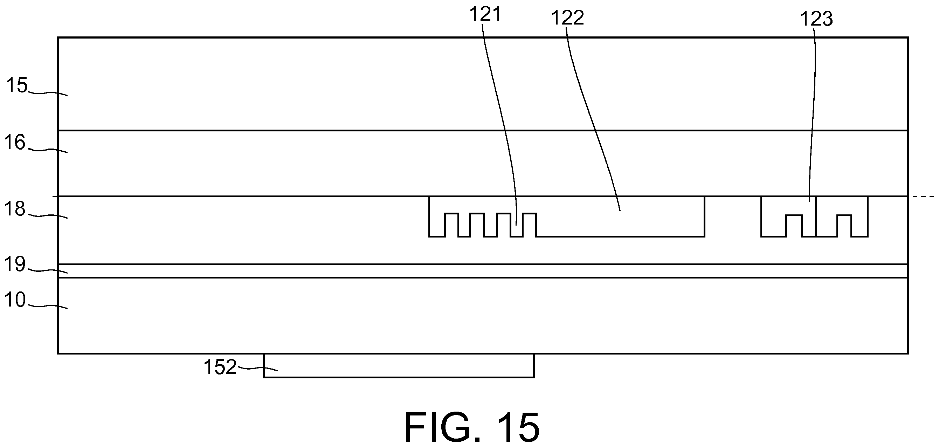

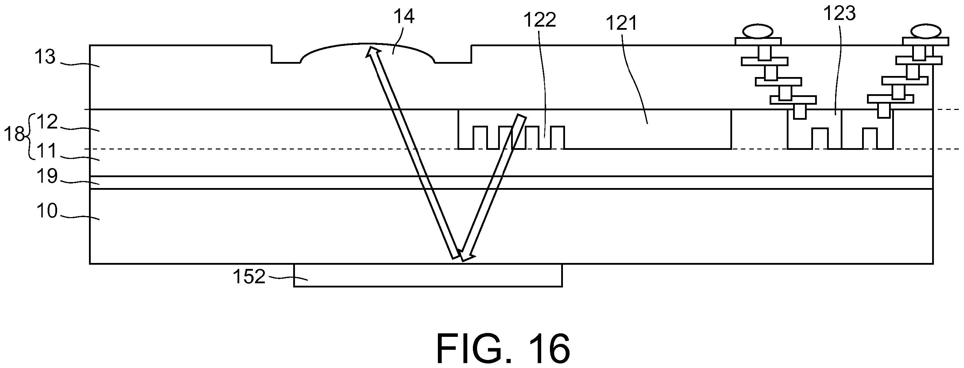

On procède ensuite (figure 14) à la formation d'une couche d'encapsulation 18 en un matériau diélectrique et au dépôt optionnel d'une couche antireflet 19 localisée ou non. On vient ensuite (figure 15) retourner la structure sur un substrat 10 présentant une structure réfléchissante 152 en face arrière. On vient ensuite procéder au retrait du premier substrat 15 et à la fabrication de la couche d'encapsulation BEOL 13 et de la lentille 14 (figure 16).

Dans une variante de réalisation, des lignes d'interconnexion électriques peuvent être formées dans la couche 18 avant retournement sur le second substrat 10. Dans ce cas, le second substrat 10 comprend également des interconnexions électriques qui, reliées à celles dans la couche 18, permettent de relier le modulateur à une puce électronique rapportée en face arrière de la puce photonique.

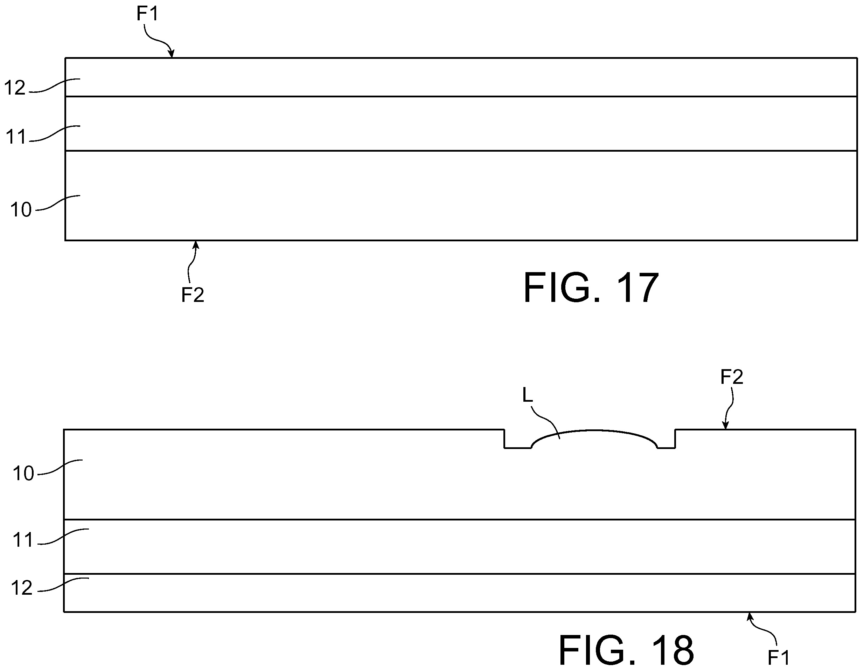

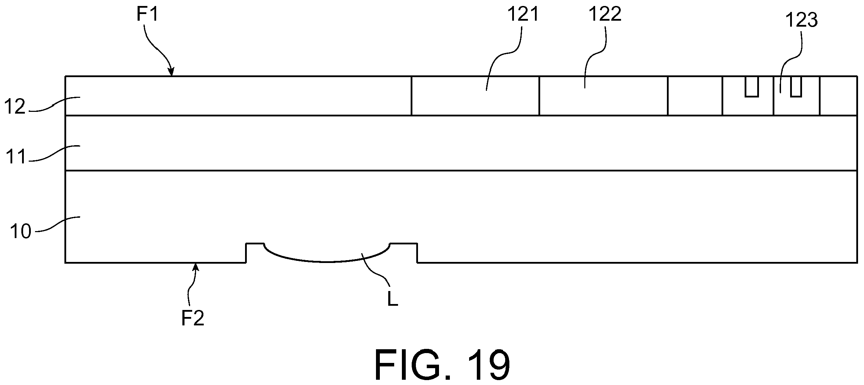

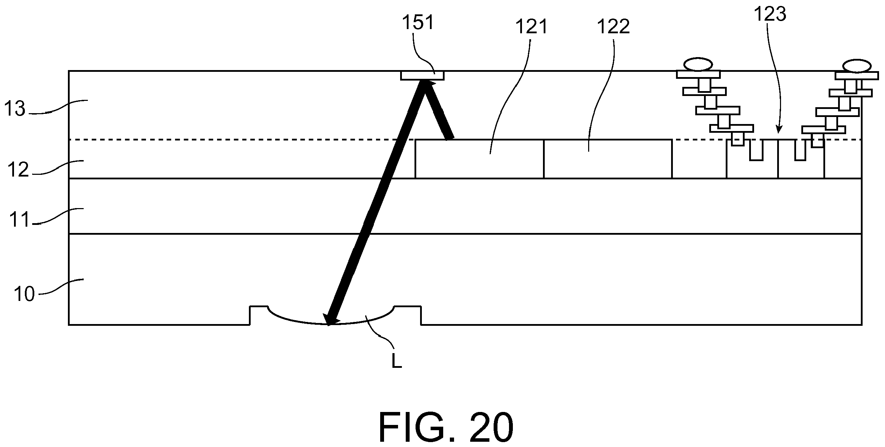

On décrit dans ce qui suit un autre exemple de réalisation d'une puce photonique conforme à l'invention et plus particulièrement d'une puce à lentille intégrée en face arrière. Le procédé débute (figure 17) par la fourniture d'un substrat SOI présentant une couche d'oxyde enterré 11 intercalée entre une couche de silicium superficielle 12 et un substrat de silicium 10. On procède à la fabrication de la lentille L en face arrière F2 du substrat 10 (figure 18), puis à la fabrication des composants photoniques (guide d'onde 121, réseau de couplage surfacique 122, modulateur PN 123, etc.) par gravure localisée, partielle ou totale, de la couche superficielle 12 et, implantation dans le cas du modulateur (figure 19). Puis en référence à la figure 20, on vient ensuite procéder à la fabrication de la couche d'encapsulation BEOL 13 qui intègre des lignes d'interconnexion électriques puis à celle d'un miroir 151 en face avant F1. Comme représenté, un trajet optique avec repliement, mais simple passage avec le substrat est obtenu. Pour atteindre la configuration illustrée en figure 6, le miroir 151 est accompagné des miroirs 152 et 153.

On retiendra que ces procédés permettent de fabriquer collectivement une pluralité de lentilles sur la puce photonique, ces lentilles étant par exemple destinées à participer à un couplage de la puce photonique à un ensemble de fibres optiques ou à un ensemble de puces photoniques Une seule opération d'alignement est alors nécessaire (alignement lithographique au niveau de la plaque). Il est de là possible de fabriquer plusieurs puces et leurs lentilles en même temps sur une même plaque, de sorte que pour une pluralité de puces, au lieu de réaliser une pluralité d'alignements, un seul alignement est nécessaire.

L'invention n'est pas limitée à la puce photonique, mais s'étend également à son procédé de fabrication, et notamment à un procédé de fabrication de plusieurs puces collectivement sur une même plaque. Ce procédé comprend la formation d'un agencement d'une ou plusieurs structures réfléchissantes chacune sur l'une des faces avant et arrière, ledit agencement étant formé de manière à assurer la propagation de la lumière dans la puce photonique depuis le réseau de couplage surfacique et la lentille selon un trajet optique passant par le substrat et présentant au moins un repliement. Le procédé comprend la formation, au niveau de l'une des faces avant et arrière de la puce photonique, d'une lentille configurée pour modifier la taille de mode de la lumière la traversant depuis ou vers le réseau de couplage surfacique.

L'invention s'étend également à un système comprenant la puce photonique selon l'invention et le dispositif extérieur doté d'une lentille remplissant la fonction inverse de la lentille intégrée à la puce, la puce et le dispositif extérieur étant optiquement couplés au moyen d'un système d'élargissement de taille de mode constitué par les deux lentilles.

## Revendications

1. Puce photonique (1) comprenant une couche de guidage de la lumière (12) supportée par un substrat (10) et recouverte par une couche d'encapsulation (13), la puce photonique présentant une face avant (F1) du côté de la couche d'encapsulation (13) et une face arrière (F2) du côté du substrat (10), la couche de guidage de la lumière incluant un guide d'onde (121) couplé à un réseau de couplage surfacique (122) configuré pour recevoir pour recevoir de la lumière depuis le guide d'onde et former un faisceau de lumière dirigé vers l'une des faces avant et arrière, la puce photonique comportant en outre une lentille (14) intégrée au niveau de l'une des faces avant et arrière et configurée pour modifier la taille de mode de la lumière la traversant depuis ou vers le réseau de couplage surfacique,
la puce photonique étant **caractérisée en ce qu'**elle comprend en outre un agencement d'une ou plusieurs structures réfléchissantes (151, 152) chacune sur l'une des faces avant et arrière, ledit agencement comportant une structure réfléchissante sur la face arrière et étant réalisé de manière à assurer la propagation de la lumière entre le réseau de couplage surfacique et la lentille selon un trajet optique présentant au moins un repliement.

2. Puce photonique selon la revendication 1, dans laquelle une structure réfléchissante dudit agencement est une couche métallique agencée sur l'une des faces avant et arrière.

3. Puce photonique selon la revendication 1, dans laquelle une structure réfléchissante dudit agencement est un réseau de Bragg distribué formé sur l'une des faces avant et arrière.

4. Puce photonique selon l'une des revendications 1 à 3, dans laquelle la lentille est intégrée au niveau de la face avant, le réseau de couplage surfacique est configuré pour rediriger le faisceau de lumière en direction de la face arrière et ledit agencement comprend le long du trajet optique une seule structure réfléchissante sur la face arrière.

5. Puce photonique selon l'une des revendications 1 à 3, dans laquelle la lentille est intégrée au niveau de la face avant, le réseau de couplage surfacique est configuré pour rediriger le faisceau de lumière en direction de la face avant et ledit agencement comprend le long du trajet optique une première structure réfléchissante sur la face avant et une deuxième structure réfléchissante sur la face arrière.

6. Puce photonique selon l'une des revendications 1 à 3, dans laquelle la lentille est intégrée au niveau de la face arrière, le réseau de couplage surfacique est configuré pour rediriger le faisceau de lumière en direction de la face arrière et ledit agencement comprend le long du trajet optique une première structure réfléchissante sur la face arrière et une deuxième structure réfléchissante sur la face avant.

7. Puce photonique selon l'une des revendications 1 à 3, dans laquelle la lentille est intégrée au niveau de la face arrière, le réseau de couplage surfacique est configuré pour rediriger le faisceau de lumière en direction de la face avant et ledit agencement comprend le long du trajet optique une première structure réfléchissante sur la face avant, une deuxième structure réfléchissante sur la face arrière et une troisième structure réfléchissante sur la face avant.

8. Puce photonique selon l'une des revendications 1 à 7, dans laquelle la couche d'encapsulation est une couche d'oxyde de silicium, une couche de nitrure de silicium, ou une couche d'un mélange d'oxyde de silicium et de nitrure de silicium.

9. Puce photonique selon l'une des revendications 1 à 8, dans laquelle la couche de guidage de la lumière repose sur une couche d'isolant, et dans laquelle une couche antireflet est interposée entre le substrat et la couche d'isolant.

10. Puce photonique selon l'une des revendications 1 à 9, dans laquelle le substrat est en verre.

11. Procédé de fabrication d'une puce photonique (1) comprenant un réseau de couplage surfacique et présentant une face avant (F1) et une face arrière (F2), le procédé comprenant la formation, au niveau de l'une des faces avant et arrière, d'une lentille (14) configurée pour modifier la taille de mode de la lumière la traversant depuis ou vers le réseau de couplage surfacique, et étant **caractérisé en ce qu'**il comprend en outre la formation d'un agencement d'une ou plusieurs structures réfléchissantes chacune sur l'une des faces avant et arrière, ledit agencement comportant une structure réfléchissante sur la face arrière et étant formé de manière à assurer la propagation de la lumière entre le réseau de couplage surfacique et la lentille selon un trajet optique présentant au moins un repliement.
